# EUROPÄISCHE PATENTSCHRIFT

(11) **EP 1 468 188 B1**
(45) Veröffentlichungstag und Bekanntmachung des Hinweises auf die Patenterteilung: **10.12.2008**
(21) Anmeldenummer: 03702539.2
(22) Anmeldetag: 27.01.2003
(51) Int. Cl.: F03D 11/00

(54) **ROTORBLATT FÜR EINE WINDKRAFTANLAGE MIT EINER DÄMPFEREINRICHTUNG**
ROTOR BLADE FOR A WIND POWER INSTALLATION WITH A DAMPING DEVICE
PALE DE ROTOR POUR EOLIENNE POURVUE D'UN SYSTEME AMORTISSEUR

(30) Priorität: 26.01.2002 DE 10202995
(43) Veröffentlichungstag der Anmeldung: 20.10.2004
(73) Patentinhaber: NORDEX Energy GmbH, 22848 Norderstedt (DE)
(72) Erfinder: RITSCHEL, Uwe, 18230 Zweedorf (DE)
(74) Vertreter: Hauck Patent- und Rechtsanwälte
(86) Internationale Anmeldenummer: PCT/EP2003/000799
(87) Internationale Veröffentlichungsnummer: WO 2003/062637

(56) Entgegenhaltungen:
- WO-A-00/06898
- WO-A-99/32789
- WO-A-99/63219
- DE-U- 20 202 054
- DE-U- 29 522 190
- US-A- 4 228 111
- US-A- 4 527 951

## Beschreibung

Die Erfindung betrifft ein Rotorblatt für eine Windkraftanlage, mit einer Dämpfereinrichtung. Bei zunehmender Länge der Rotorblätter treten Blattschwingungen auf. Die auftretenden Schwingungen können in Schwingungen aus der Rotorebene heraus und Schwingungen innerhalb der Rotorebene zerlegt werden. Konstruktionsbedingt sind die Schwingungen aus der Rotorebene heraus, in der sogenannten Schlagrichtung, unkritisch für das Rotorblatt. Anders verhält es sich jedoch mit den Schwingungen in der Rotorebene. Besonders treten Blattschwingungen in der Rotorebene bei stallregulierten Windenergieanlagen auf, bei denen die Rotorblätter starr mit der Nabe verbunden sind und bei denen die Leistungsbegrenzung bei hohen Windgeschwindigkeiten durch Strömungsabriß erfolgt.

Aus EP 0 792 414 ist eine Dämpfungseinrichtung für einen Windradflügel bekannt, die mit einem Oszillationsverringerungselement versehen ist. Bei dem bekannten Oszillationsverringerungselement schwingt ein Massenkörper in der Rotorebene gegen die Kraft einer Feder. Gedämpft wird die Bewegung des Massenkörpers durch ein Dämpferelement mit einer geschwindigkeitsproportionalen Dämpfung erzielt. Nachteilig an dem bekannten Oszillationsverringerungsmechanismus ist, daß dieser bei Federbruch ausfällt und ein unkontrolliertes Dämpfungsverhalten zeigt.

Aus WO 00/06898A ist ein Dämpfer bekannt, der ein zylindrisches Element in einer Box aufweist. Die Box ist mit einer Flüssigkeit gefüllt und besitzt eine gekrümmte Seitenwand, die zur Flügelspitze orientiert ist. Das zylindrische Element besitzt Zähne, die in einem Zahnkranz an der gekrümmten Seitenwand der Box kämmen. Der Radius der gekrümmten Seitenwand ist kleiner als der Abstand von der Nabe zu der gekrümmten Seitenwand, damit ein spezifischer Dämpfungseffekt erzielt wird. Der Dämpfer ist derart ausgelegt, daß die Oszillation der ersten Eigenfrequenz in einer Stärke gedämpft wird, die dem logarithmischen Dekrement der Amplitude von mindestens 2% entspricht. Das logarithmische Dekrement setzt dabei die Amplitude aufeinanderfolgender Schwingungszyklen ins Verhältnis zueinander.

Aus US 4,527,951 ist ein Dämpfer für ein Rotorblatt bei einem Hubschrauber bekannt. Der Dämpfer besitzt zwei über eine Welle miteinander gekoppelte rotierende Pendel, wobei in jedem Pendel ein frei beweglicher Rotationskörper vorgesehen ist.

Der Erfindung liegt die Aufgabe zugrunde, ein Rotorblatt bereitzustellen, dessen Schwingungen in der Rotorebene mit einen einfach zu dimensionierenden Dämpfer zuverlässig gedämpft werden.

Die erfindungsgemäße Aufgabe wird durch ein Rotorblatt mit den Merkmalen aus Anspruch 1 gelöst. Vorteilhafte Ausgestaltungen des Rotorblatts sind Gegenstand der Unteransprüche.

Bei dem erfindungsgemäßen Rotorblatt wird eine federlose Dämpfereinrichtung eingesetzt. Die Dämpfereinrichtung besitzt ein Gehäuseelement, in dem ein Dämpfungskörper angeordnet ist. Der Dämpfungskörper kann sich in dem Gehäuseelement hin- und herbewegen. Das Gehäuseelement besitzt zwei, vorzugsweise parallele, Flächen. Von den Flächen ist eine als gekrümmte Abrollfläche für den Dämpfungskörper ausgebildet. Das Gehäuseelement ist derart in dem Rotorblatt ausgerichtet, daß der Dämpfungskörper eine begrenzte Bewegung in der Ebene des Rotorblatts quer zu dessen Längsrichtung ausführt. Bei einer Schwingung des Rotorblatts in der Rotorebene wird der Dämpfungskörper also in dem Gehäuseelement hin- und herbewegt. Durch die Krümmung der Abrollfläche besitzt der Dämpfungskörper unter Einwirkung der Zentrifugalbeschleunigung eine ungestörte Eigenfrequenz, die ungefähr der Frequenz des Grundmode bei einer Schwingung des Rotorblatts in der Rotorebene entspricht. Die Zentrifugalbeschleunigung wird für eine Nenndrehzahl des Rotorblatts bestimmt. Die ungestörte Eigenfrequenz des Dämpfungskörpers ergibt sich, wenn dieser sich frei unter dem Einfluß der Schwerkraft und der Zentrifugalkraft auf der Krümmung der Abrollfläche bewegt. Nahe einer Ruhelage auf der Abrollfläche beschreibt der Dämpfungskörper eine annähernd harmonische Bewegung, der eine Frequenz zugeordnet werden kann. Diese wird als ungestörte Eigenfrequenz bezeichnet. Erfindungsgemäß besitzt der Dämpfungskörper in dem Gehäuseelement eine Eigenfrequenz, die ungefähr der Frequenz der zu dämpfenden Schwingung eines Rotorblatts entspricht. Die Dämpfereinrichtung besteht aus einem Gehäuseelement und einem Dämpfungskörper; ein Federelement oder ein zusätzliches Dämpferelement entfallen dabei, so daß ein Federbruch oder ein Verschleiß des Dämpferelements nicht auftreten kann. Die für die Dämpfung wichtige federnde Wirkung wird durch die Fliehkraft und die Verdrängung eines Mediums in dem Gehäuse erreicht. Erfindungsgemäß ist das Eigenfrequenzverhältnis von ungestörter Eigenfrequenz des Dämpfungskörpers zur Grundmode des Rotorblatts in der Rotorebene kleiner als 1, vorzugsweise ungefähr 0,98. Das Eigenfrequenzverhältnis wird zweckmäßigerweise abhängig von dem Verhältnis von zu dämpfender Schwingungsmasse und Masse des Dämpfungskörpers optimiert.

In einer vorteilhaften Ausgestaltung besitzt das Gehäuseelement zwei flache, parallel zueinander angeordnete Seitenwände, die die Flächen seitlich begrenzen. Das Gehäuseelement besitzt einen viereckigen Querschnitt. Damit der Dämpfungskörper durch eine Schwingung in der Rotorebene angeregt werden kann, ist die Abrollfläche von der Spitze des Rotorblatts fort gekrümmt. In seiner Ruhelage besitzt der Dämpfungskörper den geringsten Abstand zu der Spitze des Rotorblatts. Das Gehäuseelement ist ganz oder teilweise mit mindestens einem Fluid, vorzugsweise mit Luft, gefüllt. Der als Scheibe ausgebildete Dämpfungskörper rollt auf der Abrollfläche entlang deren Krümmung, wobei mindestens zu der gegenüberliegenden Fläche ein Abstand verbleibt, durch den bei einer Bewegung des Dämpfungskörpers das Fluid strömt. Der Dämpfungskörper bewegt sich also durch das Fluid und verdrängt dieses bei seiner Bewegung.

Der Dämpfungskörper ist bevorzugt als Scheibe ausgebildet, die auf der Abrollfläche entlang deren Krümmung rollt. Die Scheibe ist vorzugsweise mit einem umlaufenden Bund versehen, der an gegenüberliegenden Seitenwänden des Gehäuseelements anliegt. Durch die Anlage der Scheibe an den Seitenwänden wird eine Torkel- oder Taumelbewegung unterbunden.

Die Abrollflächen besitzen an ihren Enden bevorzugt Stirnwandabschnitte, die im wesentlichen halbkreisförmig gekrümmt sind. Der scheibenförmig ausgebildete Dämpfungskörper kann mithin von der einen Abrollfläche zu der anderen Abrollfläche über die Stirnwandabschnitte rollen. Hierdurch wird ein Anschlagen der begrenzten Bewegung des Dämpfungskörpers vermieden.

Ein bevorzugtes Ausführungsbeispiel wird nachfolgend anhand der Figuren näher erläutert. Es zeigt:
- Fig. 1: ein erfindungsgemäßes Rotorblatt mit einer Dämpereinrichtung in der Draufsicht auf die Rotorebene,
- Fig. 2: Gehäuseelement mit darin angeordneter Dämpfermasse,
- Fig. 3: Schnitt entlang der Linie 3-3 aus Fig. 2 und
- Fig. 4: Schnitt entlang der Linie 4-4 aus Fig. 2.

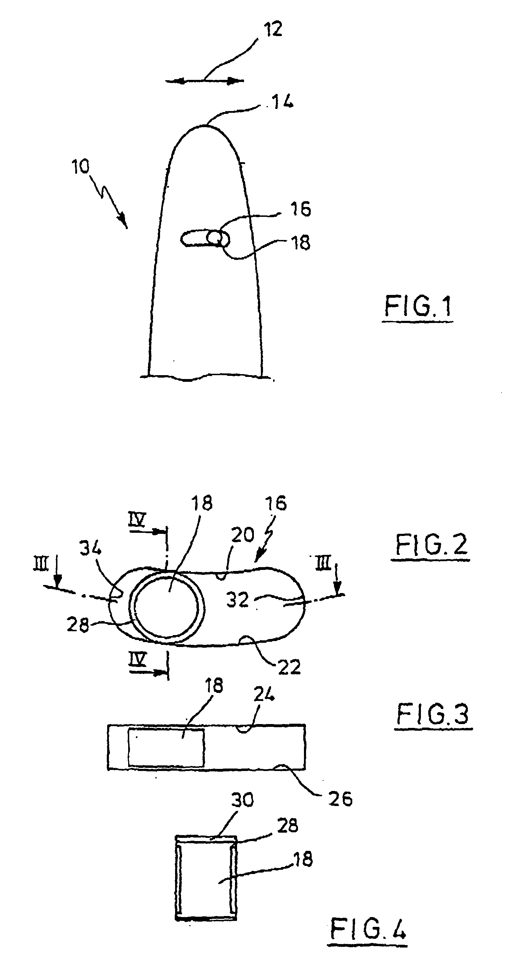

Fig. 1 zeigt ein Rotorblatt 10 in einer Draufsicht auf die Rotorebene. Das Rotorblatt wird aus glasfaserverstärktem Kunststoff hergestellt, und durch querverlaufende Stege und längsverlaufende Holme stabilisiert. Insbesondere bei Stallanlagen ist das Rotorblatt anfällig gegen Schwingungen in der Rotorebene, deren Schwingungsamplitude durch einen Doppelpfeil angedeutet ist. Die Schwingungen in der Rotorebene können als Biegeschwingung des Rotorblatts mit einer starren Befestigung an der Nabe aufgefaßt werden. Solche Biegeschwingungen können mehrere Eigenfrequenzen oder Bereiche von Eigenfrequenzen besitzen, wobei die Eigenfrequenz mit dem größten Beitrag zur Schwingungsamplitude als erste Eigenfrequenz bzw. als Grundmode bezeichnet wird. In der Regel ist dies auch die kleinste Eigenfrequenz. Gerade wenn das Rotorblatt im Stellbereich betrieben wird, in dem es zu einem Abriß der Luftströmung mit einer nachfolgenden Wirbelbildung kommt, werden auch die Schwingungen in der Rotorebene besonders stark angeregt.

Von dem erfindungsgemäßen Rotorblatt 10 ist in Fig. 1 der Bereich der Blattspitze 14 dargestellt. Beabstandet von der Blattspitze 14 ist ein Gehäuse 16 mit einem darin angeordneten Dämpfungskörper 18 vorgesehen.

Das Gehäuse 16 besitzt zwei parallel einander gegenüberliegende Flächen 20 und 22. Die Flächen 20 und 22 sind gekrümmt, vorzugsweise als Kreisbogensegment. Der Dämpfungskörper 18 rollt auf der als Abrollfläche ausgebildeten Fläche 22, die zur Spitze des Rotorblatts weist. Seitliche Querbewegung des Dämpfungskörpers werden durch die Seitenwandflächen 24 und 26 begrenzt.

Der Dämpfungskörper 18 besitzt einen umlaufenden Bund 28 entlang seinem äußeren Umfang. Der Bund 28 steht aus dem Dämpfungskörper 18 vor und liegt an den Seitenwandflächen 24 und 26 an. Der Dämpfungskörper 18 ist bevorzugt aus einer vollen Scheibe ausgebildet.

Fig. 4 zeigt den auf der Abrollfläche 22 rollenden Dämpfungskörper 18, der einem Abstand 30 zu der Fläche 20 besitzt.

Der Dämpfungskörper 18 rollt unter Wirkung der Zentrifugalkraft zwischen den Stimwandabschnitten 32 und 34 auf der Abrollfläche. Der Massenschwerpunkt des Dämpfungskörpers 18 beschreibt dabei eine Bewegung parallel zu der Abrollfläche. Bei der Bewegung entlang der Abrollfläche verdrängt der Dämpfungskörper das in Bewegungsrichtung vor ihm liegende Medium über einen zwischen Dämpfungskörper und Fläche 20 verbleibenden Schlitz 30 in den in Bewegungsrichtung hinter dem Dämpfungskörper liegenden Bereich des Gehäuses. Im Gegensatz zu einem Pendel oder einer Rotationsbewegung besitzt der Massenschwerpunkt des Dämpfungskörpers bei einer Bewegung entlang der Abrollfläche 22 eine andere Position als bei der Bewegung entlang der Abrollfläche 20.

Bevorzugt sind Gehäuse und Dämpfungskörper aus Stahl hergestellt. Das Gehäuse besteht aus einem Deckel beispielsweise in Form einer Seitenwand und einem Gehäusekörper, wobei die Flächen 20 und 22 sowie die Seitenabschnitte 32 und 34 einstückig hergestellt sein können.

Die Eigenfrequenz des Dämpfungskörpers 18 in dem Gehäuse hängt ab von der Masse des Körpers, der Krümmung des Gehäuses, der Füllung in dem Gehäuse und der Größe eines Abstands 30, sowie von der Zentrifugalbeschleunigung bei der Nenndrehzahl. Aufgrund der Drehung des Rotorblatts schließt die nach außen gerichtete Zentrifugalbeschleunigung unterschiedliche Winkel mit der Schwerkraft ein.

Für den Einbau des Gehäuses in den Rotor wird dieses in eine Tasche aus glasfaserverstärktem Kunststoff einlaminiert und beispielsweise in das Rotorblatt eingeklebt.

Als besonders vorteilhaft bei der erfindungsgemäßen Dämpfungseinrichtung hat sich erwiesen, daß eine Zentrierung der Ruhelage des Dämpfungskörpers 18 bereits durch die Fliehkraft und die konvexe Abrollfläche erfolgt. Ferner kommt der erfindungsgemäße Schwingungsdämpfer ohne zusätzliche mechanische Teile aus, so daß weder ein Verschleiß noch eine Wartung auftritt. Indem der Dämpfungskörper 18 neben seiner Bewegung zwischen den Stirnflächen des Gehäuses auch in Rotation versetzt wird, ist die effektiv wirksame Masse des Dämpfungskörpers 18 größer als die zusätzlich in den Rotor eingebaute Masse.

## Patentansprüche

1. Rotorblatt für eine Windkraftanlage, mit einer Dämpfereiririchtung im Bereich der Blattspitze, die
- ein Gehäuseelement (16) und einen in dem Gehäuseelement angeordneten Dämpfungskörper (18) aufweist,
- das Gehäuseelement besitzt zwei Flächen (20, 22), von denen eine als gekrümmte Abrollfläche (22) für den Dämpfungskörper (18) ausgebildet und derart in dem Rotorblatt ausgerichtet ist, daß der Dämpfungskörper (18) eine begrenzte Bewegung in der Ebene des Rotorblatts quer zu dessen Längsrichtung ausführt,
- die Krümmung der Abrollfläche (22) besitzt für den Dämpfungskörper eine ungestörte Eigenfrequenz, die ungefähr der Frequenz der Grundmode bei einer Schwingung des Rotorblatts in der Rotorebene entspricht,
**dadurch gekennzeichnet, daß**
- das Eigenfrequenzverhältnis von ungestörter Eigenfrequenz des Dämpfungskörpers zur Eigenfrequenz in der Grundmode des Rotorblatts für die Schwingung in der Rotorebene kleiner als 1 ist

2. Rotorblatt nach Anspruch 1, **dadurch gekennzeichnet, daß** die Flächen (20, 22) parallel zueinander verlaufen.

3. Rotorblatt nach Anspruch 1 oder 2, **dadurch gekennzeichnet, daß** das Gehäuseelement zwei flache, parallel zueinander angeordnete Seitenwände aufweist, die die Abrollflächen seitlich begrenzen.

4. Rotorblatt nach Anspruch 2, **dadurch gekennzeichnet, daß** die Abrollfläche (22) von der Spitze (14) des Rotorblatts fortgekrümmt sind.

5. Rotorblatt nach einem der Ansprüche 1 bis 4, **dadurch gekennzeichnet, daß** das Gehäuseelement (16) ganz oder teilweise mit mindestens einem Fluid gefüllt ist.

6. Rotorblatt nach Anspruch 5, **dadurch gekennzeichnet, daß** Luft als Fluid vorgesehen ist.

7. Rotorblatt nach Anspruch 5 oder 6, **dadurch gekennzeichnet, daß** der Dämpfungskörper (18) als Scheibe ausgebildet ist, die bei einer Bewegung auf der Abrollfläche (22) entlang deren Krümmung rollt.

8. Rotorblatt nach Anspruch 7, **dadurch gekennzeichnet, daß** bei einer Rollbewegung auf der Abrollfläche (22) ein Abstand (30) zu der anderen Fläche (20) verbleibt, durch die bei der Bewegung des Dämpfungskörpers das Fluid strömt.

9. Rotorblatt nach Anspruch 8, **dadurch gekennzeichnet, daß** die Scheibe auf jeder Flachseite einen umflaufenden Bund besitzt, der an den gegenüberliegenden Seitenwänden des Gehäuseelements anliegt.

10. Rotorblatt nach Anspruch 9, **dadurch gekennzeichnet, daß** die Abrollflächen an ihren Enden Stimwandabschnitte besitzen, die im wesentlichen halbkreisförmig gekrümmt sind.

11. Rotorblatt nach einem der Ansprüche 1' bis 10, **dadurch gekennzeichnet, daß** das Eigenfrequenzverhältnis von ungestörter Eigenfrequenz des Dämpfungskörpers zur Eigenfrequenz in der Grundmode des Rotorblatts für die Schwingung in der Rotorebene ungefähr 0,98 beträgt.

## Claims

1. Rotor blade for a wind power installation with a damping device in the region of the blade tip, which
- comprises a housing element (16) and a damping body (18) arranged in the housing element,
- the housing element has two surfaces (20, 22) of which one is configured as a curved rolling surface (22) for the damping body (18) and is aligned in the rotor blade such that the damping body (18) performs a limited movement in the plane of the rotor blade transversely to the longitudinal direction thereof,
- the curvature of the rolling surface (22) has an undisturbed natural frequency for the damping body, which approximately corresponds to the frequency of the fundamental mode of the rotor blade oscillating in the rotor plane,
**characterised in that**
- the natural frequency ratio of the undisturbed natural frequency of the damping body to the natural frequency of the rotor blade oscillating in the rotor plane in the fundamental mode is less than 1.

2. Rotor blade according to Claim 1, **characterised in that** the surfaces (20, 22) extend parallel to one another.

3. Rotor blade according to Claim 1 or 2, **characterised in that** the housing element has two planar side walls arranged parallel to one another which laterally define the rolling surfaces.

4. Rotor blade according to Claim 2, **characterised in that** the rolling surface (22) are curved away from the tip (14) of the rotor blade.

5. Rotor blade according to one of Claims 1 to 4, **characterised in that** the housing element (16) is entirely or partially filled with at least one fluid.

6. Rotor blade according to Claim 5, **characterised in that** air is provided as fluid.

7. Rotor blade according to Claim 5 or 6, **characterised in that** the damping body (18) is configured as a disc which, when moving on the rolling surface (22), rolls along the curvature thereof.

8. Rotor blade according to Claim 7, **characterised in that** during a rolling movement on the rolling surface (22) a spacing (30) remains relative to the other surface (20), through which the fluid flows during the movement of the damping body.

9. Rotor blade according to Claim 8, **characterised in that** the disc on each planar side has a peripheral shoulder, which bears against the opposing side walls of the housing element.

10. Rotor blade according to Claim 9, **characterised in that** the rolling surfaces have front wall portions at their ends which are substantially curved in a semi-circular shape.

11. Rotor blade according to one of Claims 1 to 10, **characterised in that** the natural frequency ratio of the undisturbed natural frequency of the damping body to the natural frequency of the rotor blade oscillating in the rotor plane in the fundamental mode is approximately 0.98.

## Revendications

1. Pale de rotor pour une éolienne, comprenant un système amortisseur dans la zone de la pointe de pale, qui
- présente un élément de boîtier (16) et un corps amortisseur (18) disposé dans l'élément de boîtier,
- l'élément de boîtier comprend deux surfaces (20, 22), dont l'une est constituée en tant que surface de roulement curviligne (22) pour le corps amortisseur (18) et orientée dans la pale de rotor de telle manière que le corps amortisseur (18) exécute un mouvement limité dans le plan de la pale de rotor transversalement par rapport à son sens longitudinal,
- la courbure de la surface de roulement (22) présente pour le corps amortisseur une fréquence propre non perturbée qui correspond approximativement à la fréquence du mode fondamental lors d'une oscillation de la pale de rotor dans le plan du rotor,
**caractérisée en ce que**
- le rapport de fréquence propre de la fréquence propre non perturbée du corps amortisseur à la fréquence propre dans le mode fondamental de la pale de rotor pour l'oscillation dans le plan du rotor est inférieur à 1.

2. Pale de rotor selon la revendication 1, **caractérisée en ce que** les surfaces (20, 22) sont parallèles l'une par rapport à l'autre.

3. Pale de rotor selon la revendication 1 ou 2, **caractérisée en ce que** l'élément de boîtier présente deux parois latérales planes, disposées parallèlement l'une par rapport à l'autre qui limitent latéralement les surfaces de roulement.

4. Pale de rotor selon la revendication 2, **caractérisée en ce que** la surface de roulement (22) sont courbées en partant de la pointe (14) de la pale de rotor.

5. Pale de rotor selon l'une des revendications 1 à 4, **caractérisée en ce que** l'élément de boîtier (16) est rempli complètement ou partiellement d'au moins un fluide.

6. Pale de rotor selon la revendication 5, **caractérisée en ce que** de l'air est prévu en tant que fluide.

7. Pale de rotor selon la revendication 5 ou 6, **caractérisée en ce que** le corps amortisseur (18) est constitué en tant que disque, qui roule lors d'un mouvement sur la surface de roulement (22) le long de la courbure de celle-ci.

8. Pale de rotor selon la revendication 7, **caractérisée en ce que** lors d'un mouvement de roulement sur la surface de roulement (22), il reste un espace (30) jusqu'à l'autre surface (20) à travers laquelle le fluide circule lors du mouvement du corps amortisseur.

9. Pale de rotor selon la revendication 8, **caractérisée en ce que** le disque présente sur chaque côté plat un collet circulaire qui est en contact avec les parois latérales opposées de l'élément de boîtier.

10. Pale de rotor selon la revendication 9, **caractérisée en ce que** les surfaces de roulement présentent à leurs extrémités des sections de paroi frontale qui sont courbées essentiellement en forme de demi-cercle.

11. Pale de rotor selon l'une des revendications 1 à 10, **caractérisée en ce que** le rapport de fréquence propre de la fréquence propre non perturbée du corps amortisseur à la fréquence propre dans le mode fondamental de la pale de rotor est d'environ 0,98 pour l'oscillation dans le plan de rotor.
